# EUROPEAN PATENT SPECIFICATION

(11) **EP 2 023 587 B1**
(45) Date of publication and mention of the grant of the patent: **19.07.2017**
(21) Application number: 08251725.1
(22) Date of filing: 16.05.2008
(51) Int. Cl.: H04M 3/56

(54) **Method for implementing conference calling based on text invitation**
Verfahren zur Umsetzung einer Konferenzschaltung auf der Basis einer Texteinladung
Procédé de mise en oeuvre d'une conférence téléphonique à partir d'une invitation de texte

(30) Priority: 30.05.2007 GB 0710278
(43) Date of publication of application: 11.02.2009
(73) Proprietor: Hutchison Whampoa Three G IP (Bahamas) Limited, Nassau, New Providence (BS)
(72) Inventor: Kochupillai, Mony, Fleet, Hampshire, GU51 5NN (GB); Sheppard, Philip Julian, Maidenhead, Berkshire, SL6 5BE (GB); Bailey, Scott Mark, Maidenhead, Berkshire, SL6 6DX (GB)
(74) Representative: Jennings, Michael John

(56) References cited:
- EP-A1- 1 540 907
- US-A1- 2002 122 391
- US-A1- 2003 093 700
- US-A1- 2005 260 976

## Description

### Field of the Invention

The present invention relates to a text based invitation method for inviting people to a telephony conference or a chat session over a mobile communication network

### Background of the Invention

Traditional conference calls/bridges have been set up through a user requesting a Conference Bridge Number and PIN. Typically the conference bridge number is the same, but the PIN is always different. The PIN's are allocated typically by a network administrator. All participants dial into the conference bridge, and then are prompted for a PIN to join the conference bridge.

The use of PIN number is seen as a barrier to the general public making use of conference calls. This is particularly true with mobile phones, where once the user has dialled the conference number, the PIN is no visible on the screen and so the user would have to memorise the PIN or write it down first (e.g. if the PIN were shown in an SMS or Email as the messaging application is no longer visible on the screen).

There are some alternative methods for setting up a conference bridge for mobile subscribers that use text messaging. Also there are Mobile Applications (JAVA or Symbian) that can be installed on some phones which are used to set up conference calls with a combination of packet based interactions (over GPRS) to set up a conference bridge.

### Current text based methods work in the following manner:-

Mobile Subscriber decides to organise a conference and sends a text message into the conference facility number containing all the participants phone numbers that want to be invited to the conference

Here the conference facility either out dials all participants, or the conference facility invites participants to dial into the conference using a text message invite from the organiser's number. Here a single Conference Number is used and recognition of participants is based on Caller ID.

The Application based solution requires handsets to be JAVA or Symbian v3 compliant as a minimum:
Here the mobile Subscriber decides to organise a conference, opens up the conference calling application on the handset. Then the subscriber selects from their contacts the participants or add in numbers manually and activates the "start conference" facility to invoke conference.

The conference facility either out dials all participants, or invites participants to dial into the conference using a text message invite from the organiser's number.

The above methods for setting up conference sessions, or group chat is not commonly used by mass market subscribers as the invitation method is not simple or straightforward. Therefore an invitation to conference calling implemented by simple means is desired.

Prior publication US2005/0660976 teaches a method of establishing a conference call using access codes wherein identifiers saved in external lists or group identifiers can also be included in the conference call. Another publication US2002/0122391 teaches a method of audio conferencing in an online text messaging application which allows anonymous users to make conference calls, also involving the use of access codes.

### Summary of the Invention

Accordingly the present invention provides a method of implementing a multiparty conference call in a mobile communications network comprising the steps of:
- setting up a conference bridge by a conference facility in the network, in response to a text message sent to the conference facility from a user terminal requesting a conference call to be set up;
- transmitting a text message from the conference facility to the user terminal requesting the conference call, said text message comprising an identifier for the conference bridge;
- wherein the identifier is a telephone number, which is not assigned for normal customer use, is temporary identifier for the conference call, and is only valid for a predetermined period of time, wherein after the identifier has been used once for a conference call, it enters quarantine; transmitting a text message containing the identifier, from the user terminal requesting the conference call to one or more other user terminals, thereby to invite the users of said one or more other user terminals to participate in the conference call; and
- one or more users joining the conference call, said step of joining consisting of dialling the identifier of the conference bridge from the respective user's user terminal to the network operator.

### Brief description of the accompanying drawing:

Figure 1 is a flow chart depicting the method of implementing a conference call according to the present invention.
Figure 2 is a flow diagram showing an example implementation of a conference call using the method according to the present invention.

### Detailed description of the Invention:

The text based invitation for group chat is an alternative method to set up a conference bridge compared to the methods known in the prior art.

Although this invention does not exclude the use of PINs for joining calls (where higher security is required), it is a further aim of this patent to make use of alternative safeguards to provide some security and therefore reduce the risk of uninvited participant joining calls.

This invention is primarily aimed at simplifying the process of setting up a conference call and in doing so making conference calls easier for the general public to use. Most systems today are aimed at business users. One aspect of this is that for the need participants to enter a PIN to enter the conference calls is removed given that absolutely confidentiality of the call is not as significant issue for general chat and instead measures are taken to reduce the probability of uninvited participants either accidentally or deliberately joining the calls.

Using a text message based scheme, a subscriber will request a conference/chat bridge to the network, the result of which will be a return text message response from the network containing a specific conference bridge number (typically E.164 format); this is then forward on (using a subsequent text message) to parties invited to the chat session where the conference bridge number is used to dial into.

The main distinction with the prior art is the two phase text based invite, which allows the service to be used by any subscriber that supports text messaging (typically GSM/3GSM subscribers). The organising party, and connecting parties must have a terminal that supports SMS/MMS text messages and voice calling or an for using the method disclosed in the present invention.

A group call/chat conference platform will need to be created. This will need to support an SMS or MMS text messaging based interface (MAP, SMTP, UDP), and also perform the voice based chat facility. Therefore support of ISUP (ISDN User part) and ability to handle voice calls is preferred to be implemented

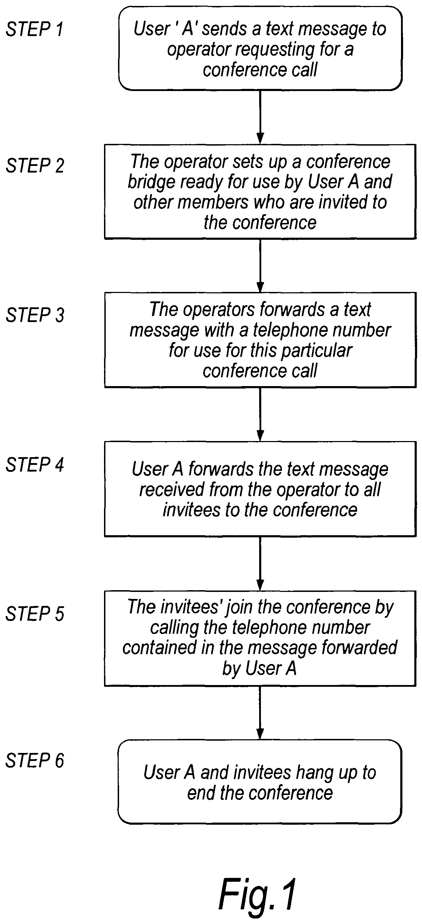

The primary embodiment for the method of invitation to a conference call according to the present invention can be implemented in the following manner:-
Figure 1 shows a simple flow chart depicting the various steps involved in the present invention.

Mobile Subscriber 'A' decides they would like to set up a conference call with a number of friends. 'A' sends a text message to a shortcode of the Conference Chat Facility. The Conferencing Chat Facility sets up a conference bridge for 'A' and his/her invited parties ready to be used.

'A' receives an initial text message explaining the Conference Chat Facility and the use of validating participants and other options, and that a follow up text message is about to be sent for the chat session that 'A' can forward to the participants. An example of the contents of the initial text therefore could be:
*'Group Chat! You will be sent a text shortly to forward to your Chat members*. *When in the chat session press 5 for further details. Full details of Group Chat at* *http:*//*www*.*three.co.uk*/*groupcht*/*'*
'A' then receives the invite text message. An example of the contents of this text message could be :
   *'Invite for a chat session - Call* +*447782065432(or any other telephone number from a pool) to join now!.'*

Standard mobile charges could be billed for such calls made using the present invention .The number in the text message is from a large Conference Pool of numbers which are assigned at random, and have a reuse time e.g. a number of days, to minimise unwanted/accidental calls into a conference.

'A' forwards/sends this text message to the friends ('B', 'C', 'D', 'E') phone numbers (could be taken from contacts). On most mobile phones, an option exists to select multiple recipients of a forwarded or composed SMS message. In this case, the user interface task user 'A' has to undergo to forward the invitation to all invitees is simplified.

'B', 'C', 'D' and 'E' receive text message from: 'A', an example of the received contents could be as follows:
*'Invite for a chat session - Call +447782065432 to join now'*

'A', 'B', 'C', 'D' and 'E' select the Use Number option in their SMS menu and dial the Conference Pool number. It may be possible that a recorded message may be audible to them when dialling in. For example, they may hear
*'Welcome to your chat session, You are the N^{th} caller to join. You will join at the tone'. ....* Etc.

The new participant joining is also announced to all the parties currently in the conference. Some conferencing solutions also ask users to record their name, so that their arrival in the conference can be announced; in the case that no PIN is needed to join the call, announcing participant's arrival will help identify situation where a non-invited participant tries to join. Conference chat takes place between all participants.

A tone or announcement may sound when a new caller comes into the chat session, and a different tone or announcement will sound when someone leaves by hanging up.

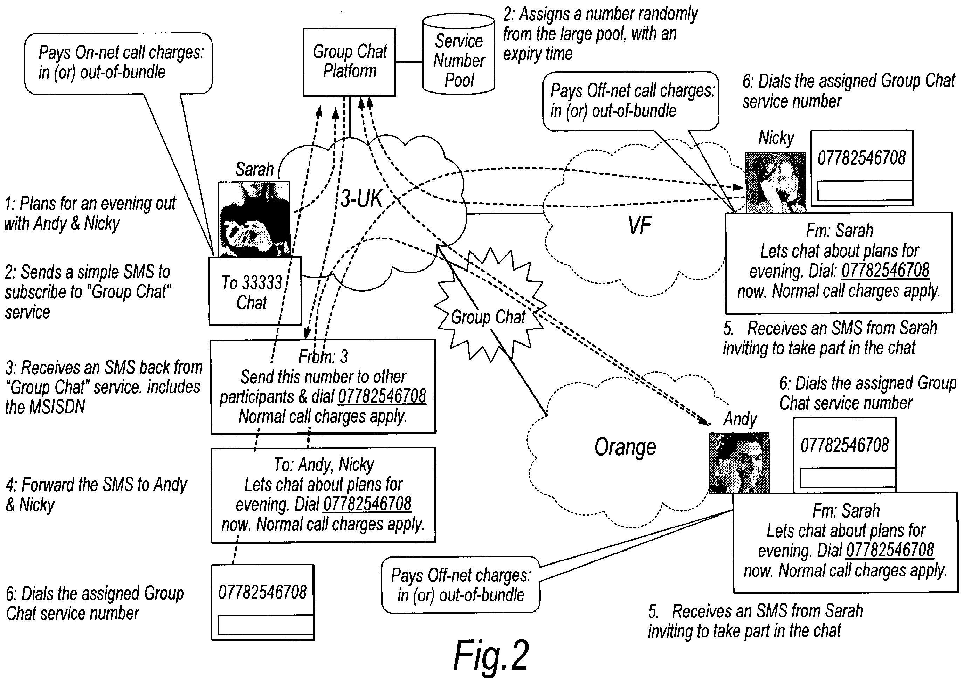

An example of an application using the present invention can be seen in figure 2.

There is a possibility in the present invention wherein the conference call initiating party could be financially rewarded by the mobile network operator if more participants join the conference call.

Pressing the numbers on the phone (resulting in DTMF (Dual Tone Multi-Frequency) tones picked up by the conference platform) could result in one of the following actions:-
Press 1 = Announcement "There are 'N' participants in the chat session"
Press 2 = Announcement "The phone numbers of participants on the call are, (Caller A's number, Caller B's number, Caller C's number... etc)"
Press 3 = Mute
Press 4 = Un-Mute
Press 5 = Announcement "Welcome to group chat, here are your options, Press 1 to hear the number of callers on this chat session, Press 2 to hear the phone numbers of the callers on this chat session, press 3 to mute your line, press 4 to un-mute your line, press 5 to hear these options again.

Other number assignments are clearly possible.

Optionally the conference platform could send another to the conference organiser once the chat session has completed (or the allocated pool number has expired) informing the organiser that the number is no longer valid.

### Characteristics of the conference pool of numbers assigned to the conference calling facility:

The numbers will not be assigned directly to customers (i.e. MSISDNs in a mobile network). The numbers will fall into one of three categories
- Ready for allocation to a conference session (In Pool - Non dialable)
- Allocated for use (Dialable now)
- Quarantined as used (Has been used in a conference call in the last [n] weeks - Non Dialable)

Quarantine period starts as soon as the number has been used once in a conference call. An allocated conference pool number will be valid to use once for a predetermined time period either set by a network operator or agreed between the operator and the party initiating the conference, e.g. for 24 hours.

After a conference pool number has been used once, it enters quarantine.

A used conference pool number can be defined as either a conference pool number that has been connected into by two or more users, and all users release i.e. hung up or can be understood as a conference pool number that has been requested to be used, but has not been dialled for 24 hours from the request time.

Once a conference pool number's quarantine period expires, it is put back to 'In Pool' status. If a conference pool number is dialled and it is in 'In Pool' or 'Quarantined' status - then a recorded announcement may be played which states that the number dialled is not in use.

The choice of limiting conference reservation to the next 24hours is arbitrary; if user feedback suggested that consumer frequently want to set-up call more than 24hours in advance, this could easily changed, although the dimensioning of phone numbers pool would need to be adjusted accordingly.

### Dimensioning the phone number pool size.

It is preferred to ensure the pool of phone numbers that can be allocated is significantly larger than the number of conference calls the system is expected to reserve. The dimension needs to take in to account two factors,

### Factor 1:

Deliberate eavesdroppers willing to dial the numbers in the allocated number range. If the design criteria were that there should be less than 1:1000 chance of an eavesdropper successfully finding a number in use, and the service provider expects a maximum of 1000 allocated calls at any one time, then the service provider would need to reserve 1m phone numbers. However if the solution required a pool of numbers much greater than 100,000 to 1, then it may become progressively more difficult to obtain a large number pool from regulators or other assignment authorities.

To help reduce attack by deliberate eavesdroppers, the conference bridge may optionally look for suspicious incoming calling patterns including
- high incidence of calls to non-allocated numbers in the pool
- callers trying number sequentially
- multiple calls to different numbers from the same CLI (caller line identification)

On detecting a suspicious calling pattern, the conference bridge may choose to block further calls from the identified CLI. Where the CLI isn't known, it could additionally choose to divert the call to operator or automated answering software offering to assist the user, or request help from the network operators in tracing the malicious calling party.

A complementary solution (where allowed by the Regulator) would be to ensure all numbers in the range are answered i.e. by incurring a cost to the calling party for dialling unallocated numbers and reducing the probability of finding an allocated number, the economics may deter the deliberate eavesdropper.

### Factor 2:

Accidental eavesdroppers e.g. an invitee tries to use the number they've received a week later. The probabilities of this number being allocated at the time they call is remote providing that the reserved phone number is large. However there could be a significant number of accidental eavesdroppers attempts e.g. if many users accidentally press on old SMS messaging in their phone's inbox. This problem can be modelled in statistical maths in a manner similar to the well-known 'Birthday Paradox' which models the possibility of finding matching pairs of numbers (equivalent to birthday dates) in a larger pool of numbers (equivalent to days in a year).

A number of measures can be put in place to help reduce the risk of accidental eavesdroppers. These include
- not activating an allocated number conference until at least two participants dial in concurrently. In this case, the first invitee to dial in will be put on hold until another joins. The probability of an accidental caller dialling in at the same time as another participant is thereby much reduced.
- not activating an allocated number conference call until the organiser joins the call. In this case, all invitees that have already dialled in will be on hold until the organiser joins. The probability of an accidental caller dialling in at the same time as the organiser is thereby much reduced. A further advantage is requiring the organiser to be present is that there is little risk of invited callers consuming the conference call in the act of dialling in (to activate the conf call), realising it hasn't started and hanging up to dial back later.

The advantage of the solution offered by the above disclosed invention is that the simple nature of the text based Conference Chat Invitation, which is an improvement to the currently available methods described in the 'background' section , and will be taken up in a greater manner by the mass market mobile subscriber community.

## Claims

1. A method of implementing a multiparty conference call in a mobile communications network comprising the steps of:
- setting up a conference bridge by a conference facility in the network, in response to a text message sent to the conference facility from a user terminal requesting a conference call to be set up;
- transmitting a text message from the conference facility to the user terminal requesting the conference call, said text message comprising an identifier for the conference bridge, wherein the identifier is a telephone number, which is not assigned for normal customer use, is a temporary identifier for the conference call, and is only valid for a predetermined period of time, wherein after the identifier has been used once for a conference call, it enters quarantine;
- transmitting a text message containing the identifier, from the user terminal requesting the conference call to one or more other user terminals, thereby to invite the users of said one or more other user terminals to participate in the conference call; and
- one or more users joining the conference call, said step of joining consisting of dialling the identifier of the conference bridge from the respective user's user terminal to the network operator.

2. The method as claimed in claim 1 wherein SMS and/or MMS based text-messaging services are used for transmitting messages over the communication network.

3. The method as claimed in claim 1 wherein the identifier is selected by the operator from a pool of identifiers to be used for conference calling.

4. The method as claimed in claim 3 wherein the identifiers in said pool are monitored at intervals to prevent eavesdropping by non- invitees.

5. The method as claimed in claim 4 wherein said pool is monitored for suspicious calling patterns.

6. The method as claimed in claim 4 wherein eavesdropping is prevented by delaying activation of the identifier until the user who requested the conference call dials the identifier.

7. The method as claimed in claim 4 wherein eavesdropping is prevented by delaying activation until at least two invitees to the conference call dial the identifier concurrently.

## Patentansprüche

1. Verfahren zur Umsetzung einer Mehrparteien-Konferenzschaltung in einem Mobilkommunikationsnetz, das die folgenden Schritte aufweist:
- Einrichten einer Konferenzbrücke durch eine Konferenzeinrichtung in dem Netz als Reaktion auf eine von einem Benutzerendgerät an die Konferenzeinrichtung gesendete Textnachricht, die die Einrichtung einer Konferenzschaltung anfordert;
- Übertragen einer Textnachricht von der Konferenzeinrichtung an das Benutzerendgerät, welches die Konferenzschaltung anfordert, wobei die genannte Textnachricht einen Bezeichner für die Konferenzbrücke aufweist, wobei der Bezeichner eine Telefonnummer ist, die nicht für normalen Kundengebrauch zugeteilt ist, ein zeitweiliger Bezeichner für die Konferenzschaltung ist und nur für eine vorbestimmte Dauer gültig ist, wobei der Bezeichner nach einmaligem Gebrauch für eine Konferenzschaltung in Quarantäne eintritt;
- Übertragen einer den Bezeichner enthaltenden Textnachricht vom Benutzerendgerät, die die Konferenzschaltung anfordert, an ein oder mehr andere Benutzerendgeräte, um dadurch die Benutzer des/der genannten einen oder mehr anderen Benutzerendgerät(e) zur Teilnahme an der Konferenzschaltung einzuladen; und
- Beitreten von einem oder mehr Benutzern zur Konferenzschaltung, wobei der genannte Beitrittsschritt aus dem Wählen des Bezeichners der Konferenzbrücke vom Benutzerendgerät des jeweiligen Benutzers zum Netzbetreiber besteht.

2. Verfahren nach Anspruch 1, wobei zum Übertragen von Nachrichten über das Kommunikationsnetz Textnachrichtendienste auf SMS- und/oder MMS-Basis verwendet werden.

3. Verfahren nach Anspruch 1, wobei der Bezeichner vom Betreiber aus einem Bestand von für Konferenzschaltungen zu verwendenden Bezeichnern ausgewählt wird.

4. Verfahren nach Anspruch 3, wobei die Bezeichner in dem genannten Bestand in Intervallen überwacht werden, um Abhören durch nicht geladene Teilnehmer zu verhüten.

5. Verfahren nach Anspruch 4, wobei der genannte Bestand auf verdächtige Anrufmuster überwacht wird.

6. Verfahren nach Anspruch 4, wobei Abhören verhütet wird, indem die Aktivierung des Bezeichners verzögert wird, bis der Benutzer, der die Konferenzschaltung anforderte, den Bezeichner wählt.

7. Verfahren nach Anspruch 4, wobei Abhören verhütet wird, indem die Aktivierung verzögert wird, bis wenigstens zwei zur Konferenzschaltung geladene Teilnehmer den Bezeichner gleichzeitig wählen.

## Revendications

1. Procédé de mise en oeuvre d'une téléconférence collective dans un réseau de communication mobile, comprenant les étapes consistant à :
- établir un pont de conférence, par une installation de conférence du réseau, en réponse à un message texte envoyé à l'installation de conférence par un terminal d'utilisateur demandant l'établissement d'une téléconférence ;
- transmettre au terminal d'utilisateur demandant la téléconférence, en provenance de l'installation de conférence, un message texte, ledit message texte comprenant un identifiant du pont de conférence, l'identifiant étant un numéro de téléphone, non attribué en vue d'une utilisation normale par un client, étant un identifiant temporaire de la téléconférence, et étant valide uniquement pendant une période de temps prédéterminée, l'identifiant entrant en quarantaine après avoir été utilisé une fois pendant une téléconférence ;
- transmettre à un ou plusieurs autres terminaux d'utilisateur, en provenance du terminal d'utilisateur demandant la téléconférence, un message texte contenant l'identifiant afin d'inviter les utilisateurs desdits un ou plusieurs autres terminaux d'utilisateur à participer à la téléconférence ; et
- faire en sorte qu'un ou plusieurs utilisateurs rejoignent la téléconférence, cette étape consistant à ce que l'utilisateur respectif du terminal d'utilisateur compose l'identifiant du pont de conférence pour l'opérateur du réseau.

2. Procédé selon la revendication 1, dans lequel des services de messagerie texte de type SMS et/ou MMS sont utilisés pour transmettre des messages sur le réseau de communication.

3. Procédé selon la revendication 1, dans lequel l'identifiant est choisi par l'opérateur parmi un groupe d'identifiants destinés à être utilisés pour des téléconférences.

4. Procédé selon la revendication 3, dans lequel les identifiants dudit groupe sont surveillés par intervalles afin d'empêcher une écoute illicite par des utilisateurs non invités.

5. Procédé selon la revendication 4, dans lequel ledit groupe est surveillé quant à d'éventuels modes d'appels suspects.

6. Procédé selon la revendication 4, dans lequel une écoute illicite est empêchée en retardant l'activation de l'identifiant jusqu'à ce que l'utilisateur ayant demandé la téléconférence compose l'identifiant.

7. Procédé selon la revendication 4, dans lequel une écoute illicite est empêchée en retardant l'activation jusqu'à ce qu'au moins deux invités à la téléconférence composent simultanément l'identifiant.
